# EUROPEAN PATENT SPECIFICATION

(11) **EP 2 487 134 B1**
(45) Date of publication and mention of the grant of the patent: **09.08.2017**
(21) Application number: 10821757.1
(22) Date of filing: 08.10.2010
(51) Int. Cl.: C01B 21/064

(54) **HEXAGONAL BORON NITRIDE POWDER AND METHOD FOR PRODUCING SAME**
PULVER AUS HEXAGONALEM BORONNITRID UND HERSTELLUNGSVERFAHREN DAFÜR
POUDRE DE NITRURE DE BORE HEXAGONAL ET SON PROCÉDÉ DE FABRICATION

(30) Priority: 09.10.2009 JP 2009235647
(43) Date of publication of application: 15.08.2012
(73) Proprietor: Mizushima Ferroalloy Co. Ltd., Okayama 712-8513 (JP)
(72) Inventor: GOHARA, Taisei, Kurashiki-shi Okayama 712-8513 (JP); KOSHIDA, Takahisa, Kurashiki-shi Okayama 712-8513 (JP); HIWASA, Shoichi, Kurashiki-shi Okayama 712-8513 (JP)
(74) Representative: Thurston, Joanna
(86) International application number: PCT/JP2010/006027
(87) International publication number: WO 2011/043082

(56) References cited:
- JP-A- 5 000 808
- JP-A- 9 295 801
- JP-A- 11 277 515
- JP-A- 60 033 204
- JP-A- 62 100 404
- JP-A- 2007 308 360
- JP-A- 2007 502 770
- US-A- 5 854 155
- US-A1- 2006 127 422

## Description

### Technical Field

The present invention relates to hexagonal boron nitride powder and a method for producing the same. More specifically, the present invention relates to hexagonal boron nitride powder having improved heat conductivity and electrical insulation and a method for producing the same.

### Prior art

Hexagonal boron nitride (h-BN) powder is widely used in various fields including solid lubricant, mold release agent for glass, insulating and heat dissipation materials, and materials for cosmetics. Such hexagonal boron nitride powder as described above is conventionally produced, for example, by a method of reacting a boron compound such as boric acid or boric acid salt with a nitrogen compound such as urea or amine at a relatively low temperature to produce coarse h-BN powder having low crystallinity and then heating the coarse h-BN powder thus obtained at a relatively high temperature to grow crystals as disclosed in JP-A 09-295801.

Generally, h-BN powder has a layered structure similar to that of graphite and exhibits advantageous characteristics as an electrical material, such as: (1) high thermal conductivity and good heat dissipation properties; (2) good electrical insulation and high dielectric strength; and (3) the lowest dielectric constant among ceramics. People are now paying attention, for example, to sheets and tapes having excellent thermal conductivity (heat dissipation properties) and electrical insulation produced by adding h-BN to resin materials such as epoxy resin, silicon rubber and the like.

When h-BN powder is used for such applications as described above, substitutability of h-BN powder for resin, i.e. chargeability of h-BN powder with respect to resin, significantly affects thermal conductivity. Accordingly, it is desired to improve chargeability of h-BN powder to attain satisfactorily high thermal conductivity.

However, chargeability of the conventional h-BN powder is not satisfactory and thermal conductivity of a sheet or a tape produced by adding such conventional h-BN powder to resin does not always meet the levels required by customers.

In order to solve the problems described above, the inventors of the present invention previously developed novel hexagonal boron nitride powder, in which size of primary particle (long side length), ratio of long side length with respect to short side length of primary particle, size of secondary (agglomerated) particle, and the like are controlled to the optimum ranges, as disclosed in JP-A 2007 308360. However, considering that an insulation sheet is increasing thinner in recent years, there remain problems that: unfavorable electrically conducting substances which degrade electrical insulation still significantly exist in h-BN; agglomerated particles of h-BN tend to break in a composite material preparing process, which is undesirable; and h-BN significantly contains voids, which degrade thermal conductivity of h-BN. Accordingly, there has been demand for further improving chargeability of hexagonal boron nitride powder and further reduction of electrical conducting substances contained as impurities in the powder.

### Disclosure of the Invention

### Problems to be solved by the Invention

As a result of development of the hexagonal boron nitride powder disclosed in JP-A 2007 308360, chargeability and thermal conductivity of hexagonal boron nitride powder has been improved.
The present invention relates to improvement of the hexagonal boron nitride powder disclosed in JP-A 2007 308360 and an object thereof is to provide hexagonal boron nitride powder, in which shapes of agglomerated particles are made more spherical than in JP-A 2007 308360 to improve chargeability and strength of powder and purity of h-BN is enhanced than in JP-A 2007 308360 to successfully improve electrical insulation and stabilize threshold voltage of a heat dissipation sheet or the like in which h-BN powder is charged.
Further, another object of the present invention is to provide hexagonal boron nitride powder, in which shape of Fe remaining as impurity in h-BN powder is controlled, or more specifically, made more spherical to eventually alleviate the tolerable content of residual Fe, as compared with JP-A 2007 308360.

### Means for solving the Problem

Hereinafter, the history of achieving the present invention will be described. Making shapes of particles of powder spherical as best as possible is advantageous in terms of improving chargeability and thus thermal conductivity of h-BN powder. However, particles of h-BN powder cannot be made satisfactorily spherical by the conventional method.
As a method of making particles of h-BN powder spherical, there has been proposed a method of subjecting h-BN powder, after production thereof, to a separately arranged process of making particles of the powder spherical. However, this method has disadvantages that not only an extra process is required but also the production cost increases (see JP-A 11 277515).

Further, in the aforementioned conventional production method, Fe of which content exceeds the tolerable value is inevitably mixed (by approximately 1000 ppm) in h-BN powder due to Fe component (Fe₂O₃) contained in boric acid as a raw material of B₄C, as well as Fe derived from a pulverizing device used in an agglomeration-pulverizing process after production of B₄C. Accordingly, Fe is removed by magnetic separation, acid cleaning treatment or the like after production of the h-BN powder in the conventional method. However, such Fe removal treatment makes the whole production process complicated and increases the production cost. Above all, such Fe removal process has a problem in terms of reliability.

In view of the situation described above, the inventors of the present invention made a keen study to find a method which enables making particles of h-BN powder more spherical than the conventional method without requiring any separate pulverizing process after production of the powder and also enables reducing content of Fe mixed into the powder as impurity.
As a result, the inventors of the present invention discovered that Fe as impurity is effectively removed by evaporation by carrying out depressurizing treatment either during a nitridization process of B₄C as a raw material or after a decarbonizing process subsequent to the nitridization process, in the production process of h-BN powder. Further, the inventors discovered that the aforementioned depressurizing treatment not only removes Fe by evaporation and also, if some Fe remains in h-BN powder, makes the residual Fe spherical and harmless.
Yet further, the inventors also discovered that, when the aforementioned depressurizing treatment is conducted, agglomerated particle bodies of obtained h-BN powder are made denser and more spherical than in the prior art, whereby the powder stably exhibits enhanced strength and significantly high bulk density (0.5 g/cm³ to 1.0 g/cm³).
The present invention has been contrived on the basis of the discoveries described above.

Specifically, main features of the present invention are as follows.
1. Hexagonal boron nitride powder, characterized in that:
   ratio (D/d) of long diameter (D) with respect to thickness (d) of a primary particle is in the range of 5 to 10;
   average particle diameter (D₅₀) of an agglomerated particle body made of the primary particles is in the range of 2 µm to 200 µm (inclusive of 2 µm and 200 µm); and
   bulk density of the powder is in the range of 0.5 g/cm³ to 1.0 g/cm³, wherein content of Fe contained as impurity in the hexagonal boron nitride powder is not higher than 500 ppm and Fe exists as spherical particles of which diameter is not larger than 50 µm.
2. The hexagonal boron nitride powder of item 1 above, wherein the average particle diameter (D₅₀) and void ratio of the agglomerated particle body is in the range of 20 µm to 80 µm (inclusive of 20 µm and 80 µm) and not larger than 50%, respectively.
3. The hexagonal boron nitride powder of item 1 or 2 above, wherein the agglomerated particle body is obtainable by baking.
4. The hexagonal boron nitride powder of any of items 1 to 3 above, wherein powder strength is at least 0.4, provided that:
   powder strength is represented by a ratio of one average particle diameter with respect to another average particle diameter of the agglomerated particle body;
   the one average particle diameter is obtained by injecting hexagonal boron nitride powder at pressure of 0.3 MPa and measuring particle diameters of the agglomerated particle bodies after injection in a dry condition to calculate the average particle diameter of the agglomerated particle bodies; and
   the another average particle diameter is obtained by injecting hexagonal boron nitride powder at pressure of 0.01 MPa and measuring particle diameters of the agglomerated particle bodies after injection in a dry condition to calculate the average particle diameter of the agglomerated particle bodies.
5. A method for producing the hexagonal boron nitride powder of any of items 1 to 4, characterized in that it comprises the steps of:
   subjecting boron carbide to nitridization treatment in nitrogen atmosphere having nitrogen partial pressure of at least 5 kPa at temperature: 1800 °C to 2200 °C;
   adding B₂O₃ and/or precursor thereof to a product obtained by the nitridization treatment;
   subjecting the mixture to decarbonizing treatment in non-oxidizing atmosphere at temperature: 1500 °C to 2200 °C; and
   subjecting a product obtained by the decarbonizing treatment to pulverization and particle size classification, to obtain hexagonal boron nitride powder,
   wherein a depressurizing process of retaining furnace internal pressure at less than100 kPa is carried out either during the nitridization treatment or after the decarbonizing treatment
6. The method of producing hexagonal boron nitride powder of item 5 above, wherein the depressurizing process is carried out in depressurized atmosphere at 80 kPa or less.

### Effect of the Invention

According to the present invention, shape of agglomerated particle body of h-BN powder can be more spherical and thus the powder can be made denser than the conventional h-BN powder. As a result, powder strength enhances, chargeability and thus thermal conductivity improves, and dielectric constant is made stable in the h-BN powder of the present invention.
Further, according to the present invention, not only Fe remaining in h-BN powder can be effectively removed but also, if some Fe remains in h-BN powder, the residual Fe can be made spherical and harmless, so that electrical insulation of the powder improves. Yet further, withstand voltage is made stable because Fe, which deteriorates withstand voltage of h-BN powder, is made to exist as spherical particles having relatively small maximum dimension.

### Brief Description of the Drawings

FIG. 1 is a flow chart showing a production process of hexagonal boron nitride powder.
FIGS. 2(a)-2(c) are diagrams showing a process of removing, by evaporation, Fe present as impurity in B₄C powder by carrying out a depressurizing process during nitridization treatment according to the present invention.
FIG. 3 is a microscope photograph of BN particles after decarbonizing treatment.
FIG. 4 is another microscope photograph of BN particles after decarbonizing treatment.
FIG. 5 is yet another microscope photograph of BN particles after decarbonizing treatment.
FIG. 6 is a diagram showing optimum thermal history and depressurizing conditions in a case where a depressurizing process is carried out during nitridization treatment.
FIG. 7 is a graph showing relationships between void ratio, bulk density and strength of h-BN powder.
FIG. 8 is a graph showing relationship between void ratio and thermal conductivity.

### Best Embodiment for carrying out the Invention

The present invention will be described in detail hereinafter.
First, reasons for why shapes and the like of particles are restricted to the aforementioned ranges in hexagonal boron nitride powder of the present invention will be described.

Ratio of long diameter with respect to thickness of primary particle: 5 to 10 It is difficult to set the average of ratio (D/d) of long diameter (D) with respect to thickness (d) of a primary particle to be less than 5 in actual production. On the other hand, the ratio (D/d) exceeding 10 on average results in specific orientation in particles, decreasing density (i.e. increasing void ratio) of agglomerated powder body. Accordingly, the ratio (D/d) is restricted in the range of 5 to 10. D/d is preferably in the range of 6 to 9.
The long diameter (D) and thickness (d) of primary particle are preferably in the ranges of 2 µm to 8 µm and 0.1 µm to 1.6 µm, respectively.

Size of agglomerated particle body made of primary particles: Average particle diameter (D₅₀) of the agglomerated particle body is in the range of 2 µm to 200 µm (inclusive of 2 µm and 200 µm)
When the size of agglomerated particle body made of primary particles, represented by the average particle diameter (D₅₀), is smaller than 2 µm, the agglomerated body has actually been pulverized to primary particles and has already ended up with scale-like structures, failing to remain as agglomerated particle body. When the average particle diameter (D₅₀) exceeds 200 µm, the agglomerated body cannot reliably maintain the shape thereof, thereby being susceptible to abrasive pulverization during the production process and thus variation in particle size. Accordingly, size of agglomerated particle body made of primary particles, represented by the average particle diameter (D₅₀), is to be restricted such that D₅₀ is in the range of 2 µm to 200 µm (inclusive of 2 µm and 200 µm) and preferably in the range of 5 µm to 100 µm (inclusive of 5 µm and 100 µm). D₅₀ is more preferably in the range of 20 µm to 80 µm (inclusive of 20 µm and 80 µm) because void ratio drops to 50% or less and agglomerated particle body is significantly made dense when D₅₀ satisfies this optimum range of particle diameter. Although the lower limit of void ratio is not particularly specified, the practical lower limit of void ratio is around 10% because it is difficult to completely eliminate voids in h-BN of which crystal grains grow anisotropically.
Void ratio of agglomerated particle body can be determined by measuring volume of micropores by using a mercury porosimeter.

### Bulk density of agglomerated particle body made of primary particles: 0.5 g/cm³ to 1.0 g/cm³

When bulk density of agglomerated particle body made of primary particles is less than 0.5 g/cm³, h-BN powder cannot be sufficiently added to resin. On the other hand, the bulk density reaches the upper limit thereof at 1.0 g/cm³ where the powder is most densely charged. Accordingly, bulk density of agglomerated particle body made of primary particles is to be set in the range of 0.5 g/cm³ to 1.0 g/cm³ and more preferably in the range of 0.6 g/cm³ to 0.9 g/cm³.

### Powder strength: at least 0.4

In the present invention, it is possible to make agglomerated particle body satisfactorily spherical and dense. As a result, it is possible to set powder strength to be at least 0.4, provided that: powder strength is represented by a ratio of one average particle diameter with respect to another average particle diameter of agglomerated particle body; the one average particle diameter is obtained by injecting hexagonal boron nitride powder at pressure of 0.3 MPa and measuring particle diameters of the agglomerated particle bodies after injection in a dry condition to calculate the average particle diameter of the agglomerated particle bodies; and the another average particle diameter is obtained by injecting hexagonal boron nitride powder at pressure of 0.01 MPa and measuring particle diameters of the agglomerated particle bodies after injection in a dry condition to calculate the average particle diameter of the agglomerated particle bodies. In the case of h-BN, powder strength thereof is expressed as a result of bonding of particles to each other during the particle growth process. It should be noted that, in the process of the present invention, the upper limit of powder strength is around 0.85 because the bonding of particles described above occurs concurrent with a reaction of removing carbon as CO. Powder strength of hexagonal boron nitride powder obtained by the method disclosed in JP-A 09 295801, analyzed by the powder strength measurement method as specified in the present invention, is only 0.2 or so.

In the present invention, "primary particle" represents a single particle constituting each scale-like structure.
Further, "agglomerated particle body" represents secondary particle as agglomeration of primary particles in which two or more primary particles are chemically bonded to each other.

In the BN powder of the present invention, at least 60% of the powder exists in the form of agglomerated particle body. The less generation of micro powder due to peeling or the like, the better. Presence of micro powder, of which content exceeds 20%, may deteriorate filler properties. Accordingly, the proportion of agglomerated particle body with respect to the powder as a whole is preferably at least 80%. The upper limit of the proportion of agglomerated particle body is around 97% because some agglomerated particle bodies are inevitably destroyed as a result of particle-size adjustment by pulverization.

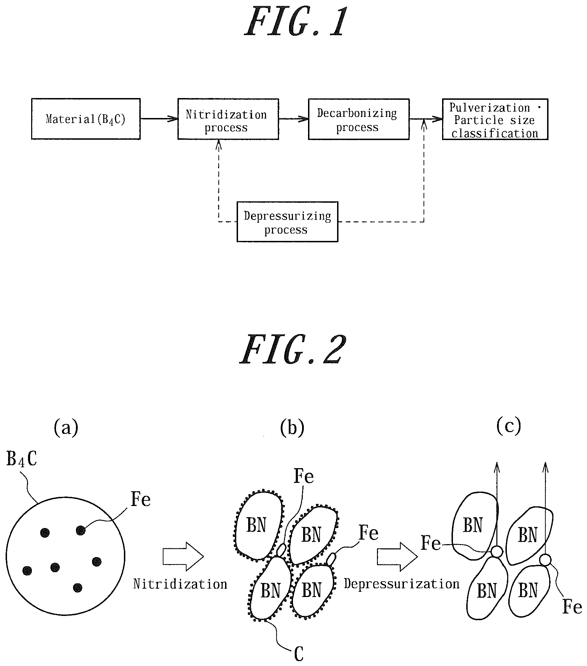

Next, the method for producing hexagonal boron nitride powder of the present invention will be described.
In general, hexagonal boron nitride powder is produced by baking boron carbide (B₄C) as a raw material in nitrogen atmosphere and subjecting the product thus obtained to decarbonizing treatment, pulverization and particle-size classification in this order, as shown in a flow chart of FIG. 1. The present invention characteristically carries out a depressurizing process either during the nitridization treatment of B₄C or after the decarbonizing treatment subsequent to the nitridization treatment.
Respective production processes will be described hereinafter.

First, for production of B₄C, boric acid (H₃BO₃) as a raw material is reacted with a carbon-containing material in non-oxidizing atmosphere at a relatively high temperature and a product thus obtained is subjected to pulverization and particle-size classification to obtain B₄C powder.

4 H₃BO₃ + 7C → B₄C + 6H₂O + 6CO

Coke, which is typically used as the carbon-containing material described above, contains Fe as impurity. Further, Fe derived from a pulverizing device is inevitably mixed into the B₄C powder in the pulverizing operation because B₄C thus synthesized is a very hard material. This Fe contamination is particularly distinct in B₄C powder for use in the present invention because the B₄C powder should be thoroughly pulverized to facilitate chemical reactions.

The B₄C powder thus obtained is then baked in nitrogen atmosphere (i.e. subjected to nitridization treatment) to obtain BN powder by a reaction of formula (1) below.

(1/2)B₄C + N₂ → 2BN + (1/2)C ··· (1)

Sufficiently high nitrogen partial pressure and temperature are necessary in order to make the above reaction proceed smoothly. It is necessary that nitrogen partial pressure is at least 5 kPa and baking temperature is in the range of 1800 °C to 2200 °C, preferably in the range of 1900 °C to 2100 °C. Nitrogen partial pressure below 5 kPa slows the nitridization reaction, thereby prolonging time required for the reaction to finish. Accordingly, atmosphere having relatively high nitrogen partial pressure is effective in terms of facilitating the nitridization reaction. The upper limit of nitrogen partial pressure is to be around 1000 kPa in view of security reason in handling high-pressure gas. Baking temperature lower than 1800 °C slows the reaction time. Baking temperature exceeding 2200 °C causes a reverse reaction and stops the nitridization reaction after all. Particle size of the B₄C powder as a raw material is not particularly restricted but set to be not larger than 1000 µm (and preferably not smaller than 2 µm) in terms of reactivity.

The BN powder thus obtained by the aforementioned reaction is then subjected to decarbonizing treatment to remove carbon remaining in the BN powder. In the decarbonizing treatment, the BN powder is mixed with B₂O₃ and/or precursor thereof (which B₂O₃ and/or precursor thereof may occasionally be referred to as "B₂O₃ and the like" hereinafter), so that residual C is removed as CO (gas) by a reaction of formula (2) below.

2BN + (1/2)C + (1/2) B₂O₃ → 2BN + (1/2)CO↑ + (1/2) B₂O₂↑ ··· (2)

The afrementioned decarbonizing treatment is carried out in non-oxidizing atmosphere under the conditions of temperature: 1500 °C to 2200 °C (preferably 1800 °C to 2200 °C) and time: at least one hour (preferably at least 6 hours and not longer than 15 hours). Sufficiently high temperature and sufficiently long treatment time result in successful reduction of carbon content in the BN powder to 0.5 mass % or lower (preferably, 0.2 mass % or lower). The carbon content cannot be reduced lower than 0.01 mass % according to the current production process. The normal pressure suffices during the decarbonizing treatment.
The nitridized material such as BN powder and "B₂O₃ and the like" are mixed with each other in the aforementioned decarbonizing treatment preferably by using a dry-type mixing device such as a V-blender, although the mixing may be done in a wet method by adding a solvent in a ball mill. The mixing is to be carried out until the mixture reaches in a homogeneous state. Specifically, mixing until the mixture visually exhibits uniform grey color suffices.

The precursor of B₂O₃ is a boron compound which can be converted into B₂O₃ by heating, and specific examples of the precursor include ammonium salt of boric acid, orthoboric acid, methaboric acid, tetraboric acid, and the like. B₂O₃ is particularly preferable among these examples of "B₂O₃ and the like", i.e. B₂O₃ and the precursor thereof.
The by-product carbon generated during production of BN powder is removed as carbon monoxide by the reaction of general formula (2) above.
The reaction of general formula (2) proceeds at temperature of 1500 -2200 °C. Evaporation of B₂O₃ proceeds at temperature equal to or higher than 1600 °C. Since both the reaction of general formula (2) and evaporation of B₂O₃ are involved with generation of gases, effective removal of gases thus generated facilitates the reaction and the evaporation effectively.

The present invention characteristically carries out a depressurizing process either during the nitridization treatment of B₄C or after the decarbonizing treatment subsequent to the nitridization treatment described above, thereby producing dense BN powder, sufficiently removing Fe in BN and making shape of residual Fe spherical and thus making residual Fe harmless.
The aforementioned characteristic features of the present invention will be described in detail hereinafter.
The boric acid material for B₄C production includes as impurities Fe₂O₃, CaO, SiO₂, Al₂O₃, and the like. Among these impurities, electrically insulating CaO, SiO₂, Al₂O₃ and the like do not particularly cause problems, if they remain in BN powder, as long as contents thereof is less than 5%. However, the smaller contents of these oxide impurities are the better in terms of satisfactorily realizing the characteristics of h-BN. Contents of such oxide impurities as described above can be reduced to 0.01% by using a commercially available high-purity boric acid material.
In contrast, Fe₂O₃ is preferably removed as much as possible because Fe₂O₃ is electrically conductive. When Fe₂O₃ content exceeds 500 ppm, electrical insulation of h-BN deteriorates. Accordingly, Fe₂O₃ content is preferably set to be not higher than 500 ppm. Specifically, good electrical insulation can be stably maintained by setting Fe₂O₃ content not to exceed 250 ppm. The lower limit of Fe₂O₃ content, although the limit value depends on Fe content in materials, is generally 20 ppm because Fe is slightly mixed into the product during the particle-size classification process.

Fe as impurity exists in a state as shown in FIG. 2A in B₄C powder. In a case where Fe is removed in the nitridization process, for example, it is preferable that Fe is removed by evaporation by subjecting B₄C to a depressurizing process during a period when B₄C starts being reacted with N. The temperature is to be set generally in the rage of 1800 °C to 2200 °C. Provision of gas flow is effective in facilitating discharge of Fe vapor.

When N₂ gas infiltrates B₄C and generation of BN particles is started during the aforementioned nitridization treatment, a state as shown in FIG. 2B is observed in which Fe as impurity exists in clearances between BN particles. Small black dots around each BN particle is carbon in FIG. 2B.

Subjecting BN particles in such a state as shown in FIG. 2B to a depressurizing process results in effective removal of Fe existing between BN particles by evaporation through clearances between the particles.
Further, if some Fe remains between BN particles without being removed by the depressurizing process, shape of such residual Fe is made spherical by the depressurization, whereby electrical insulation of BN is ensured and withstand voltage of BN is made stable.

Regarding the aforementioned depressurizing process, setting furnace internal pressure in nitrogen atmosphere to be lower than the ambient pressure, i.e. to be lower than 100 kPa, suffices. Fe concentration in BN powder can be reduced to 500 ppm or less by this treatment. Withstand voltage properties of BN powder also improve by decreasing Fe concentration in the BN powder preferably to 400 ppm or less and more preferably to 250 ppm or less.
More specifically, furnace internal pressure during the pressurizing process is preferably 80 kPa or less and more preferably 60 kPa or less. Removal of Fe by evaporation is facilitated and thus residual Fe can be further reduced by lowering the furnace internal pressure in such ranges as described above. The lower limit of Fe concentration, however, is 50 ppm according to the current production process. Regarding the lower limit of the furnace internal pressure, 20 kPa suffices in actual operations, although the limit depends on the capacity of the furnace.

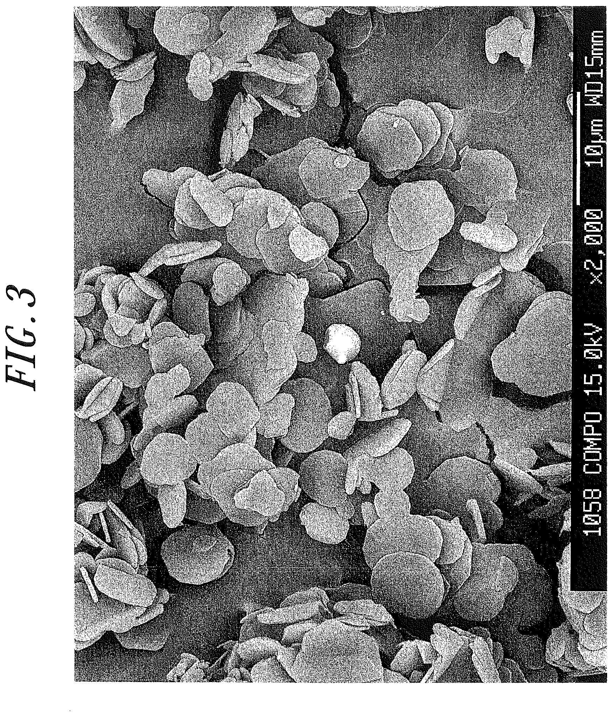

FIGS. 3 to 5 show microscope photographs of BN particles after the aforementioned treatment, respectively.

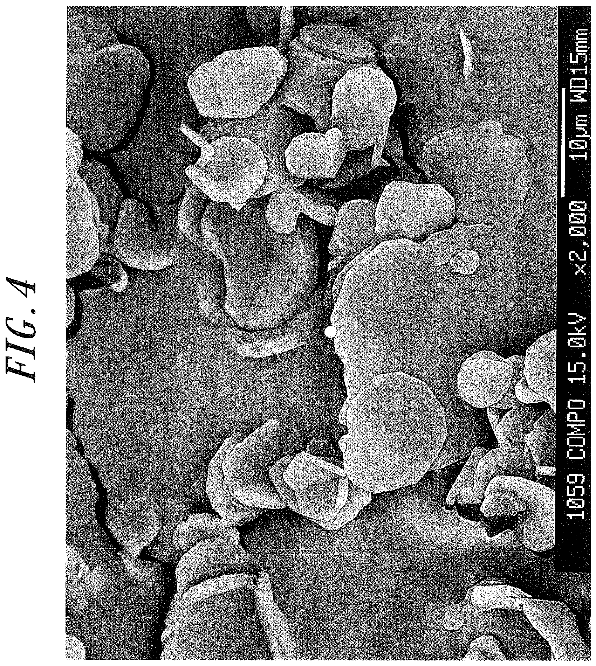

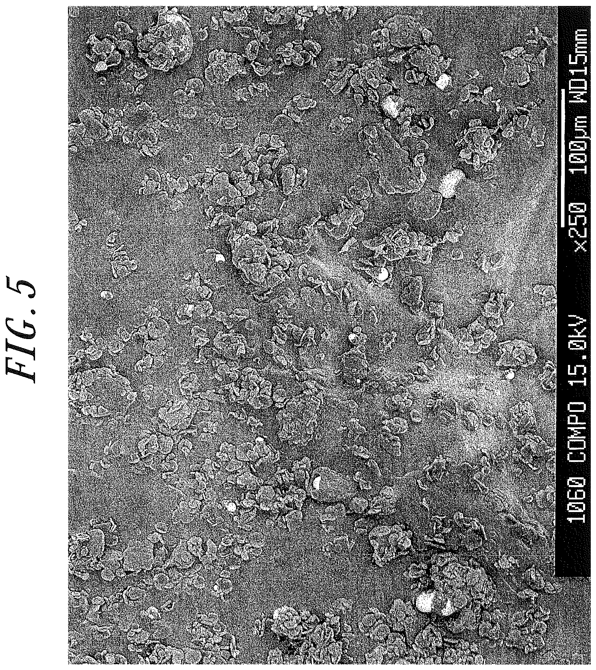

FIGS. 3 and 4 show Fe derived from B₄C, respectively, which Fe exists between BN particles, looks white and has been made spherical in the photographs. FIG. 5 shows Fe (white substances) derived from a pulverizing device (a hammer), which Fe has been generally dispersed over the field in the photograph.

Fe in BN can be removed by carrying out a depressurizing process similar to that described above not in the nitridization process but in the decarbonizing process thereafter. However, in a case where a depressurizing process is carried out in the decarbonizing process, the depressurizing process need be conducted after completion of decarbonizing reaction because conducting depressurizing treatment prior to and during decarbonizing reaction causes disadvantage that evaporation loss of B₂O₃ and the like necessary for decarbonization increases. In a case where the depressurizing process is carried out in the decarbonizing treatment, the temperature is to be kept generally in the range of 1500 °C to 2000 °C. Provision of gas flow effectively facilitates discharge of Fe vapor in this case, as well.
The block of BN thus obtained is then subjected to pulverization and particle-size classification, to produce BN powder.

Fe concentration in BN powder can be reduced to 500 ppm or less in a stable manner by conducting such a depressurizing process as described above sufficiently (e.g. for 1 to 15 hours).
Further, according to the present invention, Fe existing between BN particles can be effectively removed in a uniform manner, whereby residual Fe as a simple substance reduces volume thereof, diameter of spherical Fe is decreased and thus deterioration of electrical insulation due to Fe can be effectively prevented. Diameter of spherical Fe is preferably not larger than 50 µm. The possible lower limit of the diameter is 0.2 µm.

Yet further, according to the present invention, residual B₂O₃ can be effectively removed in a uniform manner by carrying out a depressurizing process either in the nitridization process of B₄C or after the decarbonizing process subsequent to the nitridization process, whereby strength of obtained h-BN powder increases and relatively high bulk density of the h-BN powder in the range of 0.5 g/cm³ to 1.0 g/cm³ is obtained in a stable manner.

Comparing a ratio of long diameter with respect to thickness of primary particle of the BN powder obtained according to the present invention with that of the BN powder obtained by the conventional method, the ratio resulted from the present invention is in the range of 5 to 10, while the ratio resulted from the conventional method is in the range of 11 to 15. Therefore, it is concluded that BW powder is made more spherical in the present invention than in the prior art.
A ratio of long diameter with respect to thickness of primary particle of BN powder can be determined by measuring long diameters and thicknesses of primary particles from an electron microscope photograph, calculating the averages of the long diameters and thicknesses, respectively, and obtaining a ratio of the average of the long diameters with respect to the average of the thicknesses.

### Examples

Examples of the present invention will be described hereinafter.

### Example 1

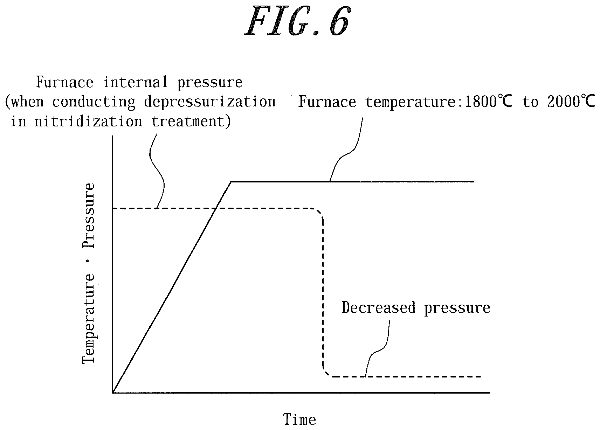

Commercially available boron carbide powder (purity: 98 mass %) was sieved by using a 44 µm sieve. The raw material powder thus sieved (101.8 g) was charged into a carbon crucible (inner diameter: 90 mm, height: 100 mm) and baked (subjected to nitridization treatment) in nitrogen atmosphere at a constant furnace internal pressure under conditions of temperature: 2000 °C and time: 10 hours.
In the aforementioned baking or nitridization treatment, a depressurizing process of retaining the furnace internal pressure at 100 kPa or lower was carried out when the furnace temperature reached temperature equal to or over 1800 °C, as shown in FIG. 6. The yield of each of sample products thus obtained by baking was 176.6 g.

69.3 g of each sample product thus obtained by baking was collected and mixed with 35.2 g of commercially available B₂O₃. The mixing was carried out by using a V-blender with inner volume of 1L and rotating the blender for 30 minutes under the condition of 1 Hz.
The powdery mixture obtained by the mixing was charged into a carbon crucible (inner diameter: 90 mm, height: 100 mm) and subjected to decarbonizing treatment in nitrogen flow at 2000 °C for 10 hours, whereby a product by second baking was obtained.

The product thus obtained by the second baking was white agglomerated particle body. As a result of X-ray diffraction analysis conducted after pulverizing the agglomerated particle body, it was confirmed that the product was almost completely constituted of h-BN.
Carbon content in the product powder was measured by using a tubular electrical resistance furnace (manufactured by Shimadzu Corporation) according to the infrared absorbing method.
Further, oxygen content in the product powder was measured by using a simultaneous oxygen and nitrogen analyzer ("EMGA-550" manufactured by HORIBA, Ltd.) according to inner gas-impulse heat melting thermal conductivity detection.
Yet further, Fe content in the product powder was measured by the phenanthroline absorption spectroscopy (JIS K 0102) or acid-dissolution ICP-mass spectroscopy and it was evaluated how spherical residual Fe was by using electron microscope photographs. Specifically, at least 25 images of Fe having diameter of at least 10 µm in the electron microscope photographs were analyzed and the average value of the diameters was calculated, thereby estimating diameter of spherical Fe.

The h-BN powder thus obtained was classified according to particle size, to prepare various powder fractions having different sizes of agglomerated powder body and different bulk densities. The average long diameter (D), the average thickness (d), the average particle diameter (D₅₀) and void rate of the agglomerated particle body, and powder strength and bulk density of the BN powder product were then analyzed. Table 1 shows the results of the analysis.
Incidentally, increase in charge ratio of h-BN powder with respect to resin generally enhances viscosity and facilitates generation of voids in the product h-BN, thereby possibly disturbing improvement of thermal conductivity, deteriorating electrical insulation and thus eventually lowering withstand voltage properties of the product h-BN. In view of this, a composite sheet was produced by using each of the BN powder samples and resin at the maximum possible charge ratio of the BN powder, i.e. the maximum viscosity which narrowly allowed molding of the mixture. Epoxy resin "Epicoat 807" (manufactured by Japan Epoxy Resin Co., Ltd.) was used as the resin and "Epicure 807" (modified alicyclic amine-grade curing agent manufactured by Japan Epoxy Resin Co., Ltd.) was used as curing agent. Each of the BN powder samples was added to the resin at the maximum possible charge ratio at which molding was narrowly possible, the BN powder thus charged was evenly dispersed in the resin, and the mixture was molded into a sheet, so that a test piece for measurement was produced from the sheet.
Thermal conductivity and withstand voltage properties of each of the composite sheets thus prepared were analyzed. Further, concentrations of impurities and the diameter of spherical Fe of each of the BN powder samples were analyzed. The results of these analyses are shown in combination in Table 2.

Methods for evaluating respective physical properties are as follows.

### (1) Bulk density

Each powder sample was dried at 105 °C until no further change in weight was observed. 3.0 g of the dried sample was accurately weighed and charged into a 20 ml graduated test tube. The test tube was set in a holder with a lid and dropped 400 times from a 45 mm height position at a rate of one drop/2 seconds. Then, the volume was read to calculate bulk density of the powder sample.

### (2) Thermal conductivity

A test piece (diameter: 10 mm x thickness: 2 mm) was cut out of each of the molded sheets, for measurement of thermal conductivity of the sheet. Thermal conductivity of the test piece was measured by laser flash method.

### (3) Withstand voltage

Dielectric breakdown voltage (KV) indicating capacity of withstanding voltage, of a solid electrically insulating material, was measured as withstand voltage under conditions of sample thickness: 0.4 mm and rate of voltage increase: 1 kV/sec (JIS C 2110).

**Table 1**

| No. | Nitridization treatment | | Depressurization in nitridization treatent | | Decarbonizing treatment | | BN powder | | | | | | | Note |
|---|---|---|---|---|---|---|---|---|---|---|---|---|---|---|
| | Temperature at which gas atmosphere was retained (°C) | Time (h) | Furnace internal pressure (kPa) | Time (h) | Temperature at which gas atmosphere was retained (°C) | Time (h) | Primary particle | | | Agglomerated particle body | | | Bulk density (g/cm³) | |
| | | | | | | | Average long diameter D (µm) | Average thickness | (µm) D/d | Average particle diameter D50 (µm) | Void rate (%) | Strength | | |
| 1 | Nitrogen gas 2000 | 10 | Not applied | | Nitrogen gas 2000 | 10 | 3.05 | 0.27 | 11.30 | 43.6 | 58 | 0.33 | 0.44 | Conventional Example |
| 2 | Nitrogen gas 2000 | 10 | 100 | 5 | Nitrogen gas 2000 | 10 | 2.44 | 0.25 | 9.71 | 68.2 | 56 | 0.35 | 0.47 | Comp. Example |
| 3 | | | 80 | | | | 3.20 | 0.34 | 9.41 | 69.2 | 49 | 0.40 | 0.53 | Example |
| 4 | | | 60 | | | | 3.15 | 0.35 | 8.97 | 59.5 | 49 | 0.43 | 0.57 | Example |
| 5 | | | 10 | | | | 2.80 | 0.32 | 8.75 | 49.3 | 41 | 0.45 | 0.69 | Example |
| 6 | | | 1 | | | | 2.69 | 0.33 | 8.15 | 44.4 | 41 | 0.48 | 0.72 | Example |
| 7 | Nitrogen gas 2000 | 10 | 100 | 10 | Nitrogen gas2000 | 10 | 3.73 | 0.42 | 8.88 | 71.7 | 53 | 0.36 | 0.46 | Comp. Example |
| 8 | | | 80 | | | | 3.01 | 0.39 | 7.72 | 68.3 | 48 | 0.41 | 0.59 | Example |
| 9 | | | 10 | | | | 2.70 | 0.33 | 8.18 | 58.3 | 43 | 0.44 | 0.63 | Example |

**Table 2**

| No. | Impurities | | | | Sheet properties | | | Note |
|---|---|---|---|---|---|---|---|---|
| | Concentration (ppm) | | | Diameter of spherical Fe (µm) | BN charge ratio (mass%) | Thermal conductivity (W/m•K) | Withstand voltage properties* | |
| | Fe | C | O | | | | | |
| 1 | 895 | 0.02 | 0.1 | 73 | 55 | 4.1 | Reference | Conventional Example |
| 2 | 634 | 0.01 | 0.1 | 51 | 60 | 4.8 | No improvement | Comp. Example |
| 3 | 455 | 0.01 | 0.1 | 49 | 60 | 5.4 | ○ | Example |
| 4 | 394 | 0.01 | 0.1 | 47 | 60 | 5.8 | ○ | Example |
| 5 | 246 | 0.01 | 0.1 | 44 | 60 | 6.1 | ● | Example |
| 6 | 70 | 0.01 | 0.1 | 43 | 60 | 6.5 | ● | Example |
| 7 | 558 | 0.01 | 0.1 | 51 | 60 | 3.8 | No improvement | Comp. Example |
| 8 | 295 | 0.01 | 0.1 | 47 | 60 | 6.6 | ○ | Example |
| 9 | 153 | 0.01 | 0.1 | 42 | 60 | 7.2 | ● | Example |
| 10 | Resin only | | | | | 0.2 | - | Extreme Example |

| | | | | | | | | |
|---|---|---|---|---|---|---|---|---|
| ○ Dielectric breakdown voltage of the Example/that of Conventional Example (No. 1) is in the range of 1.1 to 1.3 ● Dielectric breakdown voltage of the Example/that of Conventional Example (No. 1) exceeds 1.3 | | | | | | | | |

As shown in Table 1 and Table 2, each sample of the h-BN powder according to the present invention exhibits powder strength of at least 0.4, bulk density of at least 0.5, and possible maximum charge ratio with respect to resin of at least 60%, thereby demonstrating excellent thermal conductivity and withstand voltage properties. Specifically, each sample of the h-BN powder according to the present invention: has thermal conductivity which is at least 1.3 times as high as that of Conventional Example; has achieved significant reduction of Fe concentration and Fe particle diameter due to the depressurizing process, as compared with Conventional and Comparative Examples; and exhibits withstand voltage properties which is improved due to a synergetic effect caused by the aforementioned superior effects in combination with better chargeability, as compared with Conventional and Comparative Examples. Regarding the withstand voltage properties shown in Table 2, "○" represents good improvement that a ratio of dielectric breakdown voltage of the Example with respect to that of Conventional Example (No. 1) is in the range of 1.1 to 1.3 and "●" represents very good improvement that a ratio of dielectric breakdown voltage of the Example with respect to that of Conventional Example (No. 1) exceeds 1.3.
In contrast, the h-BN powder obtained by the conventional method exhibits powder strength of 0.33, bulk density of 0.44, and possible maximum charge ratio with respect to resin of less than 60%, thereby making it clear that thermal conductivity and withstand voltage properties thereof are poorer to those of the Examples according to the present invention.

### Example 2

Commercially available boron carbide powder (purity: 98 mass %) was sieved by using a 44 µm sieve. The raw material powder thus sieved (101.8 g) was charged into a carbon crucible (inner diameter: 90 mm, height: 100 mm) and baked (subjected to nitridization treatment) in nitrogen atmosphere at a constant furnace internal pressure under conditions of temperature: 2000 °C and time: 10 hours.
69.3 g of the product thus obtained by baking was then collected and mixed with 35.2 g of commercially available B₂O₃. The mixing was carried out by using a V-blender with inner volume of 1L and rotating the blender for 30 minutes under the condition of 1 Hz. The powdery mixture obtained by the mixing was charged into a carbon crucible (inner diameter: 90 mm, height: 100 mm) and subjected to decarbonizing treatment with nitrogen flow at 2000 °C for 10 hours and then a depressurizing process of retaining the furnace internal pressure at 100 kPa or lower at the furnace temperature: 2000 °C.
The yield of each of sample products thus obtained by the second baking was 176.6 g.

Each product thus obtained by the second baking was white agglomerated particle body. As a result of X-ray diffraction analysis conducted after pulverizing the agglomerated particle body, it was confirmed that the product was almost completely constituted of h-BN.
Further, C, O and Fe contents and diameter of spherical Fe of the powder were analyzed in a manner similar to those in Example 1.

Yet further, each h-BN powder product thus obtained was classified according to particle size, to prepare various powder fractions having different sizes of agglomerated powder body and different bulk densities. The average long diameter (D), the average thickness (d), the average particle diameter (D₅₀) and void ratio of the agglomerated particle body, and powder strength and bulk density of the BN powder product were analyzed. Table 3 shows the results of the analysis.
Yet further, a composite sheet was produced by using each of the BN powder samples and resin in the same manner in Example 1. Thermal conductivity and withstand voltage properties of each of the composite sheets thus prepared were analyzed. Further, concentrations of impurities and the diameter of spherical Fe of each of the BN powder samples were analyzed. The results of these analyses are shown in combination in Table 4.

**Table 3**

| No. | Nitridization treatment | | Decarbonization | | Depressurization after | | | BN powder | | | | | | | Note |
|---|---|---|---|---|---|---|---|---|---|---|---|---|---|---|---|
| | Temperature at which gas atmosphere was retained (°C) | Time (h) | Temperature at which gas atmosphere was retained (°C) | Time (h) | Temperature at which gas atmosphere was retained (°C) | Furnace internal pressure (kPa) | Time (h) | Primary particle | | | Agglomerated particle body | | Strength | Bulk density (g/cm³) | |
| | | | | | | | | Average long diameter D (µm) | Average thickness D (µm) | D/d | Average particle diameter D50 D (µm) | Void rate (%) | | | |
| 11 | Nitrogen gas 2000 | 10 | Nitrogen gas 2000 | 10 | Nitrogen gas 2000 | 100 | 5 | 3.89 | 0.42 | 9.26 | 70.3 | 55 | 0.37 | 0.47 | Comp. Example |
| 12 | | | | | | 80 | | 3.72 | 0.39 | 9.54 | 56.2 | 49 | 0.40 | 0.54 | Example |
| 13 | | | | | | 60 | | 2.69 | 0.31 | 8.68 | 62.1 | 47 | 0.42 | 0.61 | Example |
| 14 | | | | | | 10 | | 3.09 | 0.35 | 8.83 | 50.6 | 43 | 0.45 | 0.60 | Example |
| 15 | | | | | | 1 | | 3.37 | 0.41 | 8.22 | 46.2 | 41 | 0.48 | 0.70 | Example |
| 16 | Nitrogen gas 2000 | 10 | Nitrogen gas 2000 | 10 | Nitrogen gas 2000 | 100 | 5 | 3.86 | 0.43 | 8.98 | 71.2 | 52 | 0.38 | 0.48 | Comp. Example |
| 17 | | | | | | 80 | | 3.98 | 0.43 | 9.26 | 64.7 | 47 | 0.41 | 0.58 | Example |
| 18 | | | | | | 10 | | 3.66 | 0.39 | 9.38 | 51.2 | 43 | 0.43 | 0.63 | Example |

**Table 4**

| No. | Impurities | | | | Sheet properties | | | Note |
|---|---|---|---|---|---|---|---|---|
| | Concentration (ppm) | | | Diameter of spherical Fe (µm) | BN charge ratio (mass%) | Thermal conductivity (W/m•K) | Withstand voltage properties* | |
| | Fe | C | O | | | | | |
| 11 | 597 | 0.01 | 0.1 | 52 | 60 | 4.7 | No improvement | Comp. Example |
| 12 | 398 | 0.01 | 0.1 | 49 | 60 | 5.2 | ● | Example |
| 13 | 329 | 0.01 | 0.1 | 49 | 60 | 5.6 | ● | Example |
| 14 | 273 | 0.01 | 0.1 | 44 | 60 | 6.2 | ● | Example |
| 15 | 91 | 0.01 | 0.1 | 42 | 60 | 6.8 | ● | Example |
| 16 | 573 | 0.01 | 0.1 | 52 | 60 | 4.3 | No improvement | Comp. Example |
| 17 | 301 | 0.01 | 0.1 | 46 | 60 | 6.7 | ● | Example |
| 18 | 199 | 0.01 | 0.1 | 42 | 60 | 7.1 | ● | Example |

| | | | | | | | | |
|---|---|---|---|---|---|---|---|---|
| ● Dielectric breakdown voltage of the Example/that of Conventional Example (No. 1) exceeds 1.3 | | | | | | | | |

As shown in Table 3 and Table 4, each sample of the h-BN powder according to the present invention exhibits powder strength of at least 0.4, bulk density of at least 0.5, and possible maximum charge ratio with respect to resin of at least 60%, thereby demonstrating excellent thermal conductivity and withstand voltage properties. Regarding the withstand voltage properties, a ratio of dielectric breakdown voltage of each Example according to the present invention with respect to that of Conventional Example (No. 1) unanimously exceeded 1.3.
In contrast, Comparative Examples with production conditions beyond the optimum ranges of the present invention: each exhibit Fe content exceeding the tolerable value and, needless to say, poorer powder strength and bulk density than those of Examples according to the present invention; and each have poorer thermal conductivity and withstand voltage properties than those of Examples according to the present invention.

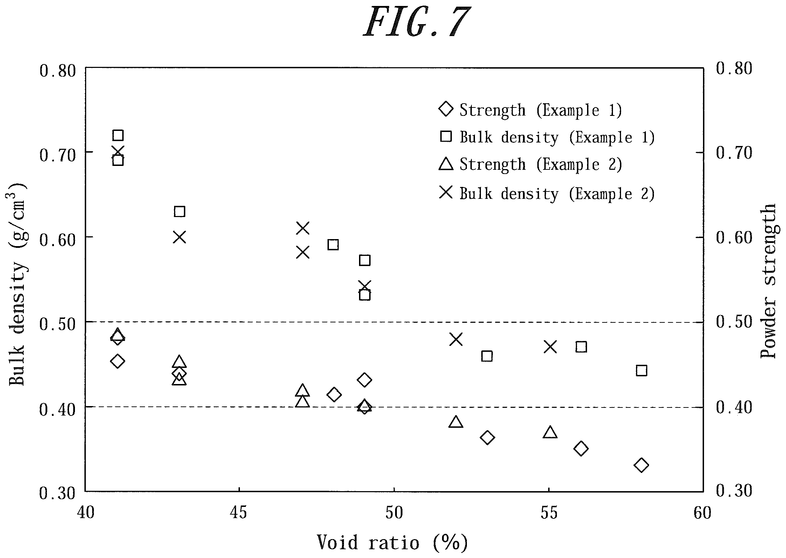

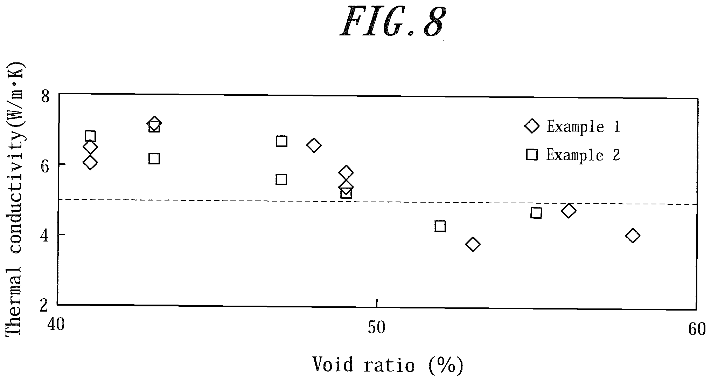

Based on the data shown in Tables 1 to 4, FIG. 7 shows in a summarized manner relationships between void ratio, bulk density and powder strength and FIG. 8 shows in a summarized manner relationship between void ratio and thermal conductivity. It is understood from FIG. 7 that decreasing void ratio to 50% or lower enhances bulk density to 0.50 g/cm³ or higher and powder strength to 0.40 or higher.
Further, it is understood from FIG. 8 that decreasing void ratio to 50% or lower results in good values of thermal conductivity, i.e. at least 5.0 W/m · K.

### Industrial Applicability

According to the present invention, chargeability of h-BN powder with respect to resin can be improved and thermal conductivity of a heat dissipation sheet or film made of the h-BN powder can be enhanced by making agglomerated particle body of h-BN powder denser, making shape of particles of the powder more spherical, and increasing strength of the powder. Further, according to the present invention, Fe remaining in h-BN powder can be effectively removed to improve electrical insulation of the powder. Yet further, if some Fe remains in the powder, shape of the residual Fe can be made spherical and thus harmless. Yet further, no post-treatment is required after production of h-BN powder, whereby processing time can be shortened and thus production cost can be reduced.
In the present invention, type of resin is not particularly limited and resins used in electric/electronic parts in general can be used.

## Claims

1. Hexagonal boron nitride powder, **characterized in that**:
ratio (D/d) of long diameter (D) with respect to thickness (d) of a primary particle is in the range of 5 to 10;
average particle diameter (D₅₀) of an agglomerated particle body made of the primary particles is in the range of 2 µm to 200 µm (inclusive of 2 µm and 200 µm); and
bulk density of the powder is in the range of 0.5 g/cm³ to 1.0 g/cm³;
wherein content of Fe contained as impurity in the hexagonal boron nitride powder is not higher than 500 ppm and Fe exists as spherical particles of which diameter is not larger than 50 µm.

2. The hexagonal boron nitride powder of claim 1, wherein the average particle diameter (D₅₀) and void ratio of the agglomerated particle body is in the range of 20 µm to 80 µm (inclusive of 20 µm and 80 µm) and not larger than 50%, respectively.

3. The hexagonal boron nitride powder of claim 1 or 2, wherein the agglomerated particle body is obtainable by baking.

4. The hexagonal boron nitride powder of any of claims 1 to 3, wherein powder strength is at least 0.4, provided that:
powder strength is represented by a ratio of one average particle diameter with respect to another average particle diameter of the agglomerated particle body;
the one average particle diameter is obtained by injecting hexagonal boron nitride powder at pressure of 0.3 MPa and measuring particle diameters of the agglomerated particle bodies after injection in a dry condition to calculate the average particle diameter of the agglomerated particle bodies; and
the another average particle diameter is obtained by injecting hexagonal boron nitride powder at pressure of 0.01 MPa and measuring particle diameters of the agglomerated particle bodies after injection in a dry condition to calculate the average particle diameter of the agglomerated particle bodies.

5. A method for producing the hexagonal boron nitride powder of any of claims 1 to 4, **characterized in that** it comprises the steps of:
subjecting boron carbide to nitridization treatment in nitrogen atmosphere having nitrogen partial pressure of at least 5 kPa at temperature: 1800 °C to 2200 °C;
adding B₂O₃ and/or precursor thereof to a product obtained by the nitridization treatment;
subjecting the mixture to decarbonizing treatment in non-oxidizing atmosphere at temperature: 1500 °C to 2200 °C; and
subjecting a product obtained by the decarbonizing treatment to pulverization and particle size classification, to obtain hexagonal boron nitride powder,
wherein a depressurizing process of retaining furnace internal pressure at less than100 kPa is carried out either during the nitridization treatment or after the decarbonizing treatment.

6. The method of producing hexagonal boron nitride powder of claim 5, wherein the depressurizing process is carried out in depressurized atmosphere at 80 kPa or less.

## Patentansprüche

1. Pulver aus hexagonalem Bornitrid, **dadurch gekennzeichnet, dass**:
ein Verhältnis (D/d) eines langen Durchmessers (D) in Bezug auf eine Dicke (d) eines Primärteilchens im Bereich zwischen 5 und 10 liegt;
ein mittlerer Teilchendurchmesser (D₅₀) eines agglomerierten Teilchenkörpers, der aus den Primärteilchen hergestellt ist, im Bereich zwischen 2 µm und 200 µm liegt (einschließlich 2 µm und 200 µm); und
eine Massendichte des Pulvers im Bereich zwischen 0,5 g/cm³ und 1,0 g/cm³ liegt;
wobei der als Verunreinigung in dem Pulver aus hexagonalem Bornitrid enthaltene Fe-Gehalt nicht höher ist als 500 ppm und Fe als kugelförmige Teilchen vorhanden ist, deren Durchmesser nicht größer als 50 µm ist.

2. Pulver aus hexagonalem Bornitrid nach Anspruch 1, wobei der mittlere Teilchendurchmesser (D₅₀) und Hohlraumanteil des agglomerierten Teilchenkörpers im Bereich zwischen 20 µm und 80 µm liegt (einschließlich 20 µm und 80 µm) und jeweils nicht größer als 50 % ist.

3. Pulver aus hexagonalem Bornitrid nach Anspruch 1 oder 2, wobei der agglomerierte Teilchenkörper durch Backen erhalten werden kann.

4. Pulver aus hexagonalem Bornitrid nach einem der Ansprüche 1 bis 3, wobei die Pulverstärke mindestens 0,4 ist, vorausgesetzt, dass:
die Pulverstärke durch ein Verhältnis eines mittleren Teilchendurchmessers in Bezug auf einen weiteren mittleren Teilchendurchmesser des agglomerierten Teilchenkörpers dargestellt ist;
der eine mittlere Teilchendurchmesser durch Folgendes erhalten wird: Einspritzen von Pulver aus hexagonalem Bornitrid bei einem Druck von 0,3 MPa und Messen von Teilchendurchmessern der agglomerierten Teilchenkörper nach dem Einspritzen in einem trockenen Zustand, um den mittleren Teilchendurchmesser der agglomerierten Teilchenkörper zu berechnen; und
der weitere mittlere Teilchendurchmesser durch Folgendes erhalten wird: Einspritzen von Pulver aus hexagonalem Bornitrid bei einem Druck von 0,01 MPa und Messen von Teilchendurchmessern der agglomerierten Teilchenkörper nach dem Einspritzen in einem trockenen Zustand, um den mittleren Teilchendurchmesser der agglomerierten Teilchenkörper zu berechnen.

5. Verfahren zur Herstellung des Pulvers aus hexagonalem Bornitrid nach einem der Ansprüche 1 bis 4, **gekennzeichnet dadurch, dass** es die folgenden Schritte umfasst:
Nitridierungsbehandlung von Borcarbid in einer Stickstoffatmosphäre, die einen Stickstoffpartialdruck von mindestens 5 kPa aufweist, bei einer Temperatur zwischen 1.800 °C und 2.200 °C;
Hinzufügen von B₂O₃ und/oder einem Vorläufer davon zu einem durch die Nitridierungsbehandlung erhaltenen Produkt;
Entcarbonisierungsbehandlung der Mischung in nichtoxidierender Atmosphäre bei einer Temperatur zwischen 1.500 °C und 2.200 °C; und
Pulverisierung und Teilchengrößenklassifizierung eines durch die Entcarbonisierungsbehandlung erhaltenen Produkts, um ein Pulver aus hexagonalem Bornitrid zu erhalten,
wobei ein Druckentlastungsvorgang des Beibehaltens eines Ofeninnendrucks bei weniger als 100 kPa entweder während der Nitridierungsbehandlung oder nach der Entcarbonisierungsbehandlung durchgeführt wird.

6. Verfahren zur Herstellung des Pulvers aus hexagonalem Bornitrid nach Anspruch 5, wobei der Druckentlastungsvorgang in druckentlasteter Atmosphäre bei 80 kPa oder weniger durchgeführt wird.

## Revendications

1. Poudre de nitrure de bore hexagonal,
**caractérisée en ce que**
le rapport (D/d) du diamètre longitudinal (D) à l'épaisseur (d) d'une particule primaire est situé dans la plage de 5 à 10,
le diamètre de particule moyen (D₅₀) d'un corps de particules agglomérées constitué des particules primaires est situé dans la plage de 2 µm à 200 µm (y compris 2 µm et 200 µm), et
la densité apparente de la poudre est située dans la plage de 0,5 g/cm³ à 1,0 g/cm³,
la teneur en fer renfermé en tant qu'impureté dans la poudre de nitrure de bore hexagonal n'étant pas supérieure à 500 ppm et Fe se présentant sous la forme de particules sphériques dont le diamètre n'est pas supérieur à 50 µm.

2. Poudre de nitrure de bore hexagonal conforme à la revendication 1, dans laquelle le diamètre de particule moyen (D₅₀) et le taux de vide dans le corps de particules agglomérées sont respectivement situés dans la plage de 20 µm à 80 µm, (y compris 20 µm et 80 µm), et non supérieurs à 50 %.

3. Poudre de nitrure de bore hexagonal conforme à la revendication 1 ou 2,
dans laquelle le corps de particules agglomérées peut être obtenu par cuisson.

4. Poudre de nitrure de bore hexagonal conforme à l'une quelconque des revendications 1 à 3,
dans laquelle la force de la poudre est d'au moins 0,4, étant précisé que la force de la poudre est représentée par le rapport d'un premier diamètre de particule moyen et d'un second diamètre de particule moyen du corps de particules agglomérées,
le premier diamètre de particule moyen est obtenu en injectant de la poudre de nitrure de bore hexagonal sous une pression de 0,3 MPa et en mesurant les diamètres de particule des corps de particules agglomérées après injection à sec pour calculer le diamètre de particule moyen des corps de particules agglomérées, et
le second diamètre de particule moyen est obtenu en injectant de la poudre de nitrure de bore hexagonal sous une pression de 0,01 MPa et en mesurant les diamètres de particule des corps de particules agglomérées après injection à sec pour calculer le diamètre de particule moyen des corps de particule agglomérées.

5. Procédé d'obtention d'une poudre de nitrure de bore hexagonal conforme à l'une quelconque des revendications 1 à 4,
**caractérisé en ce qu'**
il comprend des étapes consistant à :
soumettre du carbure de bore à un traitement de nitruration sous une atmosphère d'azote ayant une pression partielle d'azote d'au moins 5 kPa à une température de 1800°C à 2200°C,
ajouter du B₂O₃ et/ou l'un de ces précurseurs au produit obtenu à l'issue du traitement de nitruration,
soumettre le mélange à un traitement de décarbonisation sous une atmosphère non oxydante à une température de 1500°C à 2200°C, et
soumettre le produit obtenu à l'issue du traitement de décarbonisation à une pulvérisation et à une classification granulométrique pour obtenir la poudre de nitrure de bore hexagonal,
une étape de dépressurisation consistant à maintenir la pression interne du four à moins de 100 kPa étant mise en oeuvre soit au cours du traitement de nitruration, soit après le traitement de décarbonisation.

6. Procédé d'obtention d'une poudre de nitrure de bore hexagonal conforme à la revendication 5,
selon lequel le traitement de dépressurisation est mis en oeuvre sous une atmosphère dépressurisée de 80 kPa ou moins.
